# EUROPÄISCHE PATENTANMELDUNG

(11) **EP 1 491 844 A1**
(43) Veröffentlichungstag der Anmeldung: **29.12.2004**
(21) Anmeldenummer: 04011127.0
(22) Anmeldetag: 11.05.2004
(51) Int. Cl.: F41A 21/22

(54) **Verfahren zur Beseitigung von Beschichtungs- und/oder Erosionsschäden**

(30) Priorität: 25.06.2003 DE 10328450
(71) Anmelder: Rheinmetall W & M GmbH, 29345 Unterlüss (DE)
(72) Erfinder: Kaufmann, Stefan, 29221 Celle (DE)
(74) Vertreter: Dietrich, Barbara, Dipl.-Ing.

(57) **Zusammenfassung**

Die Erfindung betrifft ein Verfahren zur Beseitigung von an der inneren Oberfläche eines Waffenrohres (1) befindlichen Beschichtungs- und/oder Erosionsschäden, wobei der jeweils schadhafte Rohrbereich (3) durch einen geeigneten Beschichtungswerkstoff ausgefüllt und gegebenenfalls mechanisch nachbearbeitet wird.

Um zu erreichen, daß Beschichtungs- und Erosionsschäden eines Waffenrohres (1) auf einfache und kostengünstige Weise sicher repariert werden können, ohne daß damit eine nennenswerte Schwächung des Waffenrohres verbunden ist, schlägt die Erfindung vor, den Beschichtungswerkstoff durch Auftragsschweißen auf den jeweils schadhaften Rohrbereich (3) aufzubringen.

## Beschreibung

Die Erfindung betrifft ein Verfahren zur Beseitigung von an der inneren Oberfläche eines Waffenrohres befindlichen Beschichtungs- und/oder Erosionsschäden, wobei der jeweils schadhafte Rohrbereich durch einen geeigneten Beschichtungswerkstoff ausgefüllt und gegebenenfalls mechanisch nachbearbeitet wird.

Insbesondere aus Stahl bestehende Waffenrohre großkalibriger Rohrwaffen zeigen beim Verschießen leistungsgesteigerter Munitionsarten aufgrund ihrer beim Abschuß entstehenden hohen Gastemperaturen und Strömungsgeschwindigkeiten starke Erosionen, die das jeweilige Waffenrohr bereits vor Erreichen seiner Ermüdungslebensdauer verschleißen.

Aus der DE 100 41 114 A1 ist es bereits bekannt, die schadhaften Rohrbereiche durch einen entsprechenden Beschichtungswerkstoff auszufüllen, so daß eine geschlossene Rohroberfläche entsteht. Das Beschichtungsverfahren und der Beschichtungswerkstoff sind dabei derart aufeinander abgestimmt, daß die innere Rohroberfläche lokal repariert wird, ohne daß sich die metallographischen und metallurgischen Werkstoffeigenschaften des Werkstoffes des Waffenrohres verändern. Insbesondere wird in der DE 100 41 114 A1 vorgeschlagen, kein Auftragsschweißverfahren zu verwenden, wie es beispielsweise aus der DE 199 19 687.7 zur Erzeugung einer relativ dünnen geschlossenen Schutzschicht zwecks Erosionsverschleiß im Waffenrohr an sich bekannt ist, weil es durch lokales Aufschmelzen des Waffenrohres in den schadhaften Bereichen zu Gefügeumwandlungen kommt, die zu einer Schwächung des Waffenrohres führen können.

Bei Anwendung des bekannten Verfahrens hat sich indessen gezeigt, daß spaltförmige Risse nicht immer vollständig geschlossen werden, so daß es trotz des aufgebrachten Beschichtungswerkstoffes bei der bestimmungsgemäßen Anwendung des Waffenrohres zu einem weiteren (verdeckten) Rißwachstum kommen kann.

Der Erfindung liegt die Aufgabe zugrunde, ein Verfahren der eingangs erwähnten Art anzugeben, mit dem Beschichtungs- und Erosionsschäden aufweisende Waffenrohre auf einfache und kostengünstige Weise sicher repariert werden können, ohne daß damit eine nennenswerte Schwächung des Waffenrohres verbunden ist.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung beruht im wesentlichen auf dem Gedanken, den Beschichtungswerkstoff durch Auftragsschweißen auf den jeweils schadhaften Rohrbereich aufzubringen.

Bei dem Auftragsschweißen bildet sich in dem oberflächennahen Bereich des Waffenrohres ein den geschmolzenen Waffenrohrwerkstoff und den Schichtwerkstoff enthaltendes Schmelzbad aus, welches anschließend erstarrt, so daß sich ein inniger Verbund zwischen Rohrstahl und Zusatzwerkstoff ergibt. Dieses führt dazu, daß ein am Grund des Erosionsschadens möglicherweise vorhandener Riß vollständig geschlossen wird. Wie sich überraschenderweise gezeigt hat, führen die durch das Auftragsschweißen bedingten Gefügeumwandlungen im oberflächennahen Bereich jedenfalls dann zu keiner nennenswerten Schwächung des Waffenrohres, wenn durch eine entsprechende Temperaturregelung die maximale Wärmeeinflußzone in der Rohrwand ≤ 1 mm eingestellt wird.

Als Auftragsschweißverfahren kann sowohl ein Laser- oder ein Plasmaauftragsschweißverfahren verwendet werden.

Der Schichtwerkstoff kann in pulver-, draht- oder bandförmiger Form kurz vor dem Auftreffen des Laserstrahles auf die innere Oberfläche des Waffenrohres eingebracht und durch diesen aufgeschmolzen werden.

Weitere Einzelheiten und Vorteile der Erfindung ergeben sich aus dem folgenden anhand einer Figur erläuterten Ausführungsbeispiel.

In der Fig. ist mit 1 ein Abschnitt eines Waffenrohres bezeichnet, dessen innere Oberfläche mit einer Hartchromschicht 2 beschichtet ist. In dem mit 3 bezeichneten schadhaften Rohrbereich ist die Chromschicht 2 abgeplatzt und das Waffenrohr 1 durch Erosion beschädigt, so daß eine Vertiefung 4 entstanden ist.

Zur Beseitigung der Vertiefung 4 wird das Waffenrohr 1 zunächst, z.B. mittels Sandstrahlen, in dem schadhaften Rohrbereich 3 gereinigt. Anschließend wird ein Auftragsschweißkopf 5 in das Innere des Waffenrohres eingeführt. Der Auftragsschweißkopf 5 ist hierzu über eine Verfahreinrichtung 6 mit einer aus Übersichtlichkeitsgründen nicht dargestellten Manipulatoreinrichtung zur translatorischen und rotatorischen Bewegung verbunden.

Bei dem Auftragsschweißkopf 5 kann es sich beispielsweise um einen Laser mit nachgeschalteter Optik handeln, welche das Laserlicht auf einen Teilbereich des schadhaften Rohrbereiches 3 fokussiert. Mit dem Auftragsschweißkopf 5 ist ferner eine Rohrleitung 7 zur Zufuhr eines Schutzgases verbunden. Außerdem wird der pulver-, draht- oder bandförmige Beschichtungswerkstoff über eine Einrichtung 8 einer an dem Auftragsschweißkopf 5 angeordneten Zuführvorrichtung 9 zugeführt.

Zur Reparatur des Waffenrohres 1 wird der Auftragsschweißkopf 5 über der Vertiefung 4 positioniert und der Laser angeschaltet. Gleichzeitig wird der Beschichtungswerkstoff kurz vor dem Auftreffen des Laserstrahles 10 auf die innere Oberfläche 11 des Waffenrohres 1 in diesen eingebracht und durch diesen geschmolzen, so daß sich in dem oberflächennahen Bereich des Waffenrohres 1 ein den geschmolzenen Waffenrohrwerkstoff und den Schichtwerkstoff enthaltendes Schmelzbad ausbildet, welches bei der Weiterbewegung des Laserstrahles 10 erstarrt.

Das Verfahren wird unter Schutzgasatmosphäre oder auch im Vakuum durchgeführt, um eine Reaktion des schmelzflüssigen Beschichtungswerkstoffes mit der Umgebungsatmosphäre zu verhindern.

Nach dem Auffüllen der gesamten Vertiefung 4 fährt der Auftragsschweißkopf 5 mit Hilfe der nicht dargestellten Manipulatoreinrichtung den nächsten schadhaften Rohrbereich an und füllt die entsprechende Vertiefung ebenfalls mit dem Beschichtungswerkstoff auf.

Nach Abschluß der Beschichtung aller schadhaften Rohrbereiche wird der Auftragsschweißkopf 5 aus dem Waffenrohr 1 entfernt und die mit dem Beschichtungswerkstoff aufgefüllten Bereiche werden mittels eines spanabhebenden Verfahrens (z.B. Drehen) nachbearbeitet.

### Bezugszeichenliste

- 1: Waffenrohr
- 2: Hartchromschicht
- 3: schadhafter Rohrbereich
- 4: Vertiefung
- 5: Auftragsschweißkopf
- 6: Verfahreinrichtung
- 7: Rohrleitung
- 8: Einrichtung
- 9: Zuführvorrichtung
- 10: Laserstrahl
- 11: innere Oberfläche

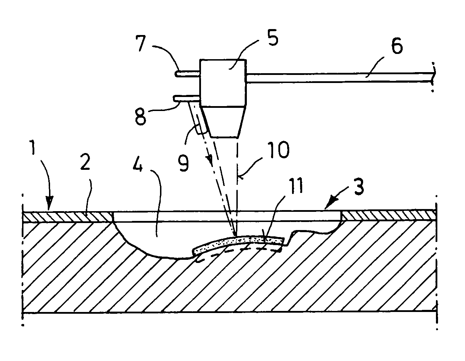

## Patentansprüche

1. Verfahren zur Beseitigung von an der inneren Oberfläche eines Waffenrohres (1) befindlichen Beschichtungs- und/oder Erosionsschäden, wobei der jeweils schadhafte Rohrbereich (3) durch einen geeigneten Beschichtungswerkstoff ausgefüllt und gegebenenfalls mechanisch nachbearbeitet wird, **dadurch gekennzeichnet, daß** der Beschichtungswerkstoff durch Auftragsschweißen auf den jeweils schadhaften Rohrbereich (3) aufgebracht wird.

2. Verfahren nach Anspruch 1, **dadurch gekennzeichnet, daß** durch eine Temperaturregelung die maximale Wärmeeinflußzone in der Wand des Waffenrohres ≤ 1 mm eingestellt wird.

3. Verfahren nach Anspruch 1 oder 2, **dadurch gekennzeichnet, daß** der Beschichtungswerkstoff durch Laser- oder Plasmaauftragsschweißen auf den jeweils schadhaften Rohrbereich (3) aufgebracht wird.
